Europäisches Patentamt

European Patent Office

Office européen des brevets

(19)

(11) **EP 0 449 075 B1**

(12) ## EUROPEAN PATENT SPECIFICATION

(45) Date of publication and mention
of the grant of the patent:
**03.01.1996 Bulletin 1996/01**

(51) Int Cl.6: **H04N 5/44**

(21) Application number: **91104160.6**

(22) Date of filing: **18.03.1991**

(54) **Image reproduction apparatus**

**Bildwiedergabegerät**

**Appareil de reproduction d'image**

(84) Designated Contracting States:
**DE FR GB**

(30) Priority: **30.03.1990 JP 84628/90**

(43) Date of publication of application:
**02.10.1991 Bulletin 1991/40**

(73) Proprietor: **KABUSHIKI KAISHA TOSHIBA**
**Kawasaki-shi, Kanagawa-ken 210, Tokyo (JP)**

(72) Inventor: **Matsushita, Akira,**
**c/o Intellectual Property Div.**
**Minato-ku, Tokyo 105 (JP)**

(74) Representative: **Henkel, Feiler, Hänzel & Partner**
**D-81675 München (DE)**

(56) References cited:
**EP-A- 0 155 675      EP-A- 0 249 962**
**JP-A- 1 236 383**

- **SMPTE JOURNAL, vol. 96, no. 6, June 1987,**
  **pages 527-531, White Plains, NY, US; K.**
  **MURAKAMI et al.: "A proposed universal**
  **signal-processing system"**
- **IDEM**

# EP 0 449 075 B1

## Description

The present invention relates to an image reproduction apparatus utilizing a plurality of DSPs (digital signal processors) and, more particularly, to an image reproduction apparatus which can efficiently perform various signal processing operations using a smaller number of DSPs. As is well known, a conventional image reproduction apparatus, e.g., a television receiver, a video tape recorder, and the like performs various signal processing operations by arranging special-purpose circuits for the corresponding processing operations. For example, in a conventional television receiver added with a ghost cancel function, a section for performing reproduction processing of video and voice signals, and a section for performing ghost cancel processing are independently arranged as special-purpose hardware units. For this reason, when a teletext receiving function, for example, is to be added in addition to the ghost cancel function, a hardware unit exclusively used for the teletext receiving processing is required. More specifically, in the conventional image reproduction apparatus, blocks for executing signal processing operations are required in units of functions, and as the number of functions is increased, a circuit scale is undesirably increased.

Prior art document JP-A-1 234 383 (cf. US-A-4 991 019) discloses a digital video signal processing system, in which a plurality of programmable processor units each receive two different video signals, process the video signal in accordance with a program, and output the result of the signal processing. A network section receives the output data signals from the plurality of programmable processor units and a plurality of video signals from exterior, supplies the received signals to the plurality of programmable processor units, and leadouts any one of the produced signals or input video signals. The network section is capable of freely altering a connection pattern of the plurality of programmable processor units and the programmable processor units may have signal processing functions as defined by applied programs.

Further, prior art document SMPTE Journal, vol. 96, no. 6, K. Murakami et al.: "A proposed universal signal-processing system", discloses a signal-processing system wherein a host computer reads positional information from a joystick and converts this information to control data during a vertical blanking period so as to transfer the control data to a plurality of processor units.

Prior art document EP-A-0 155 675 describes a color signal processing circuit, wherein multiplier and multiplicand output means is connected to a multiplier having a multiplier and multiplicand input section. The multiplier and a multiplicand output means produces second matrix coefficient signals in response to first matrix coefficient signals, an automatic chroma control signal and an adjustment signal. The second matrix coefficient signals are inputted to the multiplier on a time-sharing basis and are multiplied with an input digital chroma signal in this multiplier. The second matrix coefficient signals include an automatic chroma control component, a color saturation control component and an hue control component.

Finally, prior art document EP-A-0 249 962 discloses a digital video signal processor in which the number of elements is reduced by conducting a time-sharing processing.

It is an object of the present invention to provide an image reproduction apparatus, in which a signal processing circuit is constituted by utilizing DSPs, and programs supplied to the DSPs are changed to execute a plurality of signal processing operations, so that many functions can be added without increasing a circuit scale.

To solve this object the present invention provides an image processing apparatus as specified in claim 1 or 2.

The image reproduction apparatus for converting an input video signal into a digital signal and performing a plurality of systems of signal processing operations of the digital video signal, comprises especially a DSP signal processor constituted by combining a plurality of DSPs each incorporating a program memory which stores a plurality of programs corresponding to the plurality of systems of signal processing operations in independent areas, and a switching circuit for addressing the areas of the program memory incorporated in each of the plurality of DSPs of the DSP signal processor to time-divisionally switch the programs to be supplied to the plurality of DSPs on the basis of a transmission timing of the video signal.

The image reproduction apparatus comprises a DSP signal processor incorporating a program memory, memories, arranged outside the plurality of DSPs of the DSP signal processor, for storing a plurality of programs corresponding to a plurality of systems of signal processing operations, and a switching circuit for time-divisionally switching desired programs from the memories on the basis of a transmission timing of the video signal, and causing the program memory of each of the DSPs to load the switched program.

This invention can be more fully understood from the following detailed description when taken in conjunction with the accompanying drawings, in which:

Fig. 1 is a block diagram showing an arrangement of a television receiver added with a ghost cancel function;

Fig. 2 is a block diagram showing a detailed arrangement of a transversal filter used in the television receiver;

Fig. 3 is a flow chart for explaining an operation of ghost cancel processing of the television receiver;

Fig. 4 is a waveform chart for explaining detection of a GCR signal used in the ghost cancel processing;

Figs. 5A to 5C are waveform charts for explaining an operation of the ghost cancel processing;

Fig. 6 is a block diagram showing an embodiment of an image reproduction apparatus according to the present invention;

Figs. 7A to 7C are views for explaining a ghost arithmetic processing period, and a video signal processing period of a DSP used in this embodiment;

Figs. 8A to 8E are schematic diagrams for explaining the DSP;

Fig. 9 is a block diagram showing an equivalent internal structure of the DSP;

Fig. 10 is a block diagram showing a switching means for a program to be supplied to the DSP;

Fig. 11 is a timing chart for explaining an operation of the switching means;

Fig. 12 is a schematic block diagram showing ghost cancel processing by the DSP;

Fig. 13 is a schematic block diagram of video signal processing by the DSP;

Fig. 14 is a comparison table of processing operations to be executed by the DSPs when the ghost cancel processing and video signal processing are executed;

Fig. 15 is a block diagram showing another switching means for a program to be supplied to the DSP;

Figs. 16A to 16F are timing charts for explaining an operation of the switching means shown in Fig. 15;

Fig. 17 is a block diagram showing another embodiment of the present invention;

Fig. 18 is a view for explaining an operation of the embodiment shown in Fig. 17;

Figs. 19A and 19B are respectively schematic block diagrams of luminance signal processing and chrominance signal processing by DSPs of the embodiment shown in Fig. 17; and

Fig. 20 is a comparison table of processing operations to be executed by DSPs when the luminance signal processing and chrominance signal processing are executed.

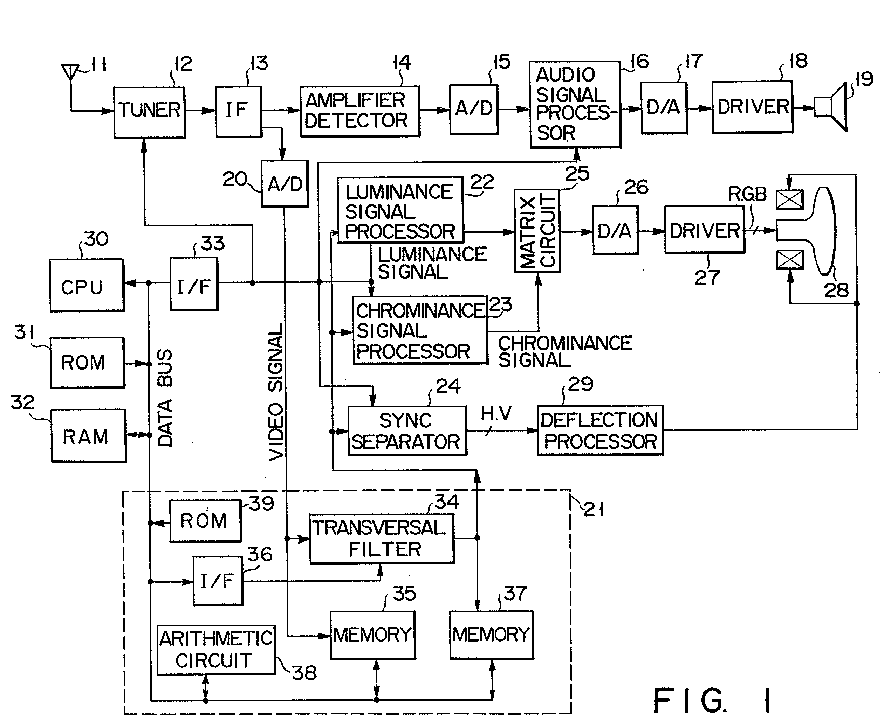

Prior to a description of an embodiment of the present invention, signal processing functions described in this embodiment will be briefly explained below. Fig. 1 shows an arrangement of a television receiver added with a ghost cancel function. A television radio wave received by an antenna 11 is supplied to a tuner 12. A desired channel signal is selected by the tuner 12, and is converted into an intermediate frequency (IF) signal. The IF signal is output to an IF processor 13. The IF processor 13 amplifies and detects the input IF signal, and separates it into a video bass-band signal, and an audio IF signal. The audio IF signal is supplied to an audio IF amplifier/detector 14, and is amplified and detected by the amplifier/detector 14. Thereafter, the audio IF signal is converted into a digital signal by an A/D (analog-to-digital) converter 15. The output from the A/D converter 15 is supplied to an audio signal processor 16, and is subjected to various processing operations such as audio multiplex processing, sound quality processing, balance processing, and the like. Thereafter, the digital signal is converted into an analog signal by a D/A (digital-to-analog) converter 17. The analog signal is input to a loudspeaker 19 via a driver 18.

On the other hand, the video signal separated by the IF processor 13 is converted into a digital signal by an A/D converter 20, and the digital signal is supplied to a ghost cancel block 21 (to be described later), which removes a ghost component. The video signal from which the ghost component is removed by the ghost cancel block 21 is supplied to a luminance signal processor 22, a chrominance signal processor 23, and a sync separator 24. The luminance signal processor 22 executes processing of the input video signal, e.g., adjustment of a contrast, image quality, and the like, and outputs the processed signal to one input of a matrix circuit 25. The chrominance signal processor 23 performs color contrast adjustment, hue adjustment, and chrominance demodulation, and the like of the input video signal, and outputs the processed signal as the other input of the matrix circuit 25. The matrix circuit 25 generates R, G, and B component digital signals on the basis of the outputs from the luminance signal processor 22 and the chrominance signal processor 23. These digital signals are converted into analog signals by a D/A converter 26, and the analog signals are then subjected to image display on a CRT (cathode ray tube) 28 via a driver 27. The sync separator 24 executes processing for reproducing, e.g., a horizontal sync signal H and a vertical sync signal V. A horizontal deflection signal, a vertical deflection signal, right and left raster distortion correction signals, and the like are generated by a deflection processor 29 on the basis of the reproduced horizontal and vertical sync signals H and V, and are subjected to control of the CRT 28.

In Fig. 1, reference numeral 30 denotes a microprocessor (to be referred to as a CPU hereinafter). The CPU 30 controls respective circuits via an interface 33, using a program ROM (read-only memory) 31, and an arithmetic RAM (random-access memory) 32, on the basis of various parameters indicating a channel, a tone volume, brightness, color tone, and the like designated by a user using an operation unit of a television receiver main body or a remote control transmitter.

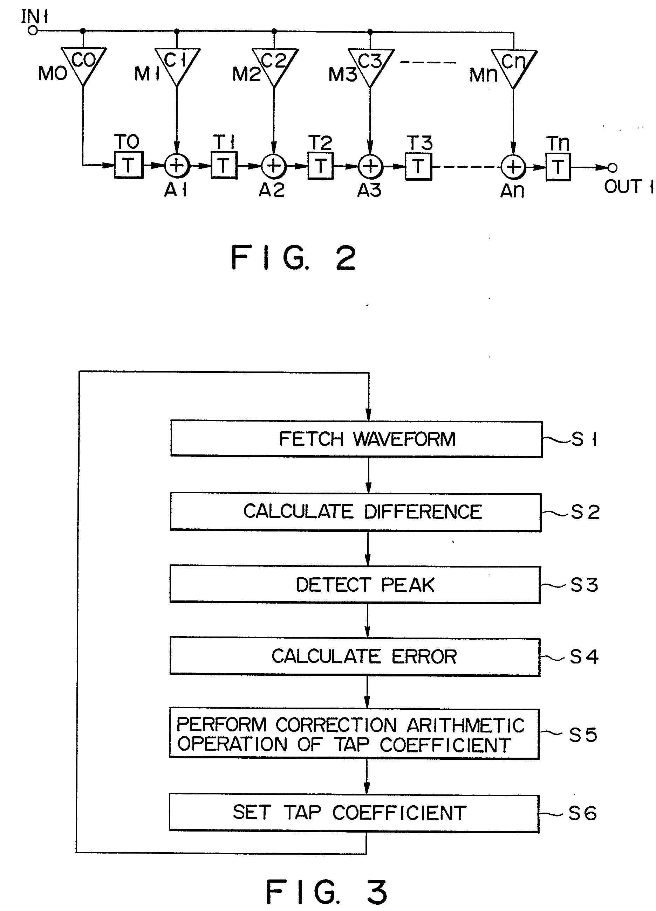

The ghost cancel block 21 will be described below. The digital video signal converted by the A/D converter 20 is supplied to a transversal filter 34, and an input waveform memory 35. The transversal filter 34 has an arrangement, as shown in Fig. 2, which exemplifies an n-tap arrangement (n is an integer). A video signal supplied to an input terminal IN1 is multiplied with tap coefficients C0, C1, C2, C3,..., Cn by multipliers M0, M1, M2, M3,..., Mn, and outputs from the multipliers M0 to Mn are convoluted by delay circuits TO, T1, T2, T3,..., Tn, and adders A1, A2, A3,..., An, so that a video signal from which a distortion component caused by ghost is removed is output from an output terminal OUT1. The tap coefficients C0 to Cn of the multipliers M0 to Mn are set by the CPU 30 via an interface 36.

The input waveform memory 35 fetches and stores a ghost reference signal waveform (GCR) superposed on a vertical blanking period of a video signal containing a ghost component. The video signal subjected to arithmetic processing by the transversal filter 34 is supplied to an output waveform memory 37. The output waveform memory 37 fetches and stores a ghost reference signal waveform (GCR) superposed on the vertical blanking period of the video signal. The signals fetched by the input and output waveform memories 35 and 37 are subjected to predetermined arithmetic processing by an arithmetic circuit 38. Thereafter, an error component between the calculated signal and a reference waveform stored in a reference waveform ROM 39 is calculated. The arithmetic circuit 38 calculates the tap coefficients C0 to Cn on the basis of the error component, and supplies them to the transversal filter 34 via the interface 36, thus executing a series of ghost cancel operations.

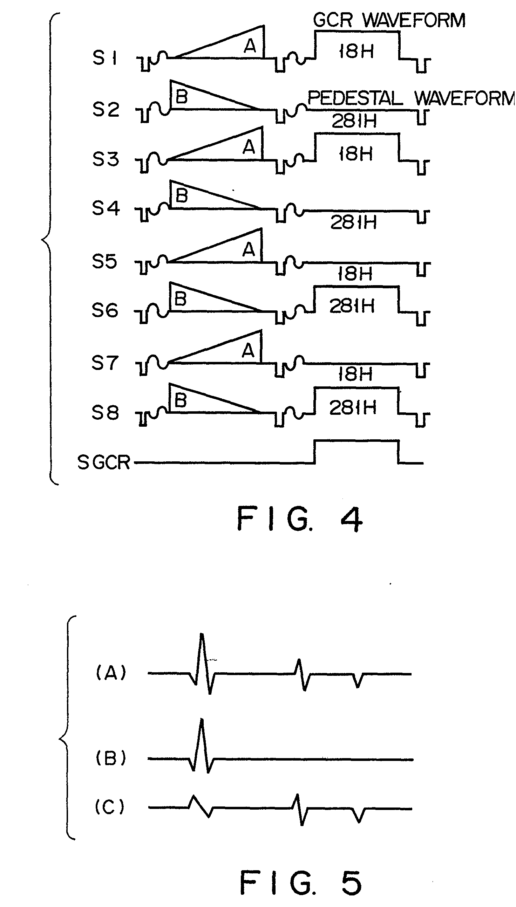

The ghost cancel operations will be described in detail below with reference to the flow chart of Fig. 3. In step S1, waveforms input to and output from the transversal filter 34 are fetched in the input and output waveform memories 35 and 37, respectively. The waveforms fetched in the input and output waveform memories 35 and 37 are supplied to the arithmetic circuit 38, thus extracting GCR signals SGCR. Extraction of the GCR signals SGCR is realized by executing the following arithmetic operation in an 8-field sequence shown in Fig. 4:

$$SGCR = (1/4) \cdot \{(S1 - S5) + (S6 - S2) + (S3 - S7) + (S8 - S4)\}$$

Thereafter, in step S2, the arithmetic circuit 38 executes a difference calculation on the basis of the extracted GCR signals SGCR, thus obtaining an input waveform difference signal, as shown in Fig. 5A. In step S3, a peak position of the input waveform difference signal is detected. The peak position of the input waveform difference signal serves as a reference used when the above-mentioned tap coefficients C0 to Cn are corrected. A peak position of an output waveform is calculated based on this peak position using the arithmetic circuit 38, and is subtracted from the reference waveform (Fig. 5B) stored in the reference waveform ROM 39 in step S4, thereby obtaining an error signal shown in Fig. 5C.

In step S5, the tap coefficients C0 to Cn to be supplied to the transversal filter 34 are corrected by utilizing the error signal obtained in this manner.

Arithmetic operations of these tap coefficients C0 to Cn are executed by the following correlation arithmetic operation:

$$Cinew = Ciold - \alpha \cdot \Sigma Xk \cdot ek+i$$

where $Ci$ is the ith tap coefficient, and suffixes "new" and "old" represent before and after correction, $Xk$ is the input signal, $ek$ is the error signal, and $\alpha$ is a very small positive amount. The new tap coefficients Cinew are set in the transversal filter 34 via the interface 36, and thereafter, the above-mentioned operations are repeated to remove a ghost component.

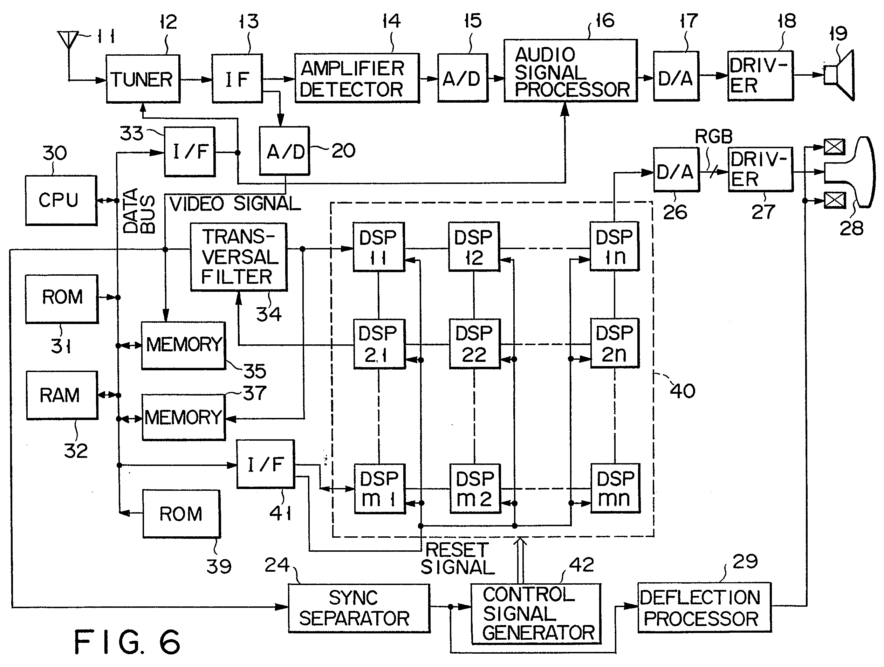

An embodiment wherein the present invention is applied to the television receiver added with the ghost cancel function will be described below with reference to the accompanying drawings. The same reference numerals in Fig. 6 denote the same parts as in Fig. 1. Reference numeral 40 in Fig. 6 denotes a DSP signal processor, which comprises a plurality of DSPs 11 to mn. The DSP signal processor 40 is controlled by an output from the CPU 30 supplied to the DSPs 11 to mn via an interface 41. The interface 41 supplies two systems of signals to the DSP signal processor 40. One signal includes input/output waveform data and control data necessary in ghost cancel processing, or parallel control data necessary in television signal processing, and the other signal includes a reset signal for defining start timings of programs in the DSPs 11 to mn. The DSP signal processor 40 is controlled by an output from a control signal generator 42 for generating a control signal on the basis of an output from the sync separator 24. The output from the transversal filter 34 is supplied to the DSP 11 in the DSP signal processor 40, and tap coefficients are set in the transversal filter 34 by the DSP 21.

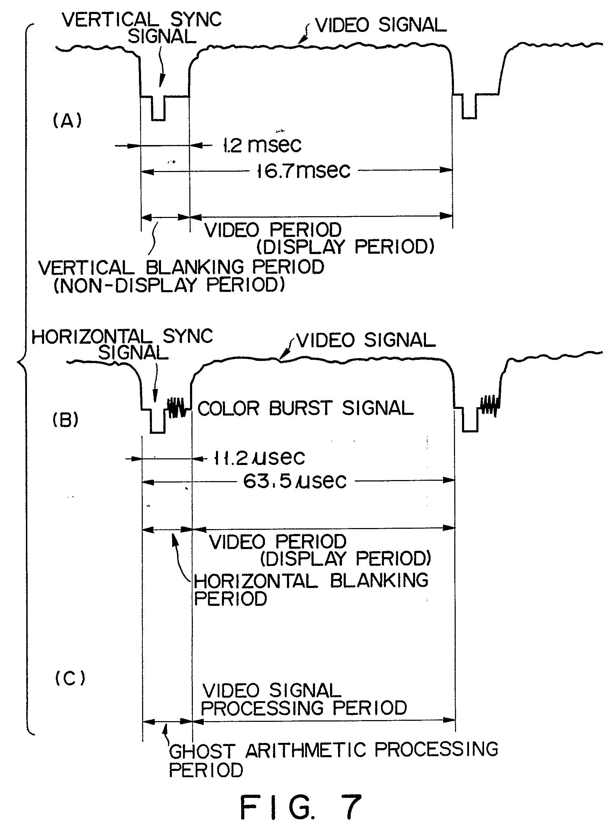

The operation of the above-mentioned arrangement will be described below. Fig. 7A is a chart obtained when a video signal is viewed in a vertical period, and Fig. 7B is a chart obtained when a video signal is viewed in a horizontal period. In either chart, the video signal is constituted by a video period, and a vertical or horizontal blanking period. As can be seen from Figs. 7A and 7B, luminance signal processing, chrominance signal processing, and the like can be executed by the DSP signal processor 40 during only the video period, and need not be executed during other periods, i.e., blanking periods. Thus, according to the present invention, processing other than luminance signal processing, chrominance signal processing, and the like is executed by the DSP signal processor 40 during the blanking periods, thus efficiently using the plurality of DSPs 11 to mn. In this embodiment, the DSP signal processor 40 performs ghost cancel arithmetic processing during the blanking periods, as shown in Fig. 7C.

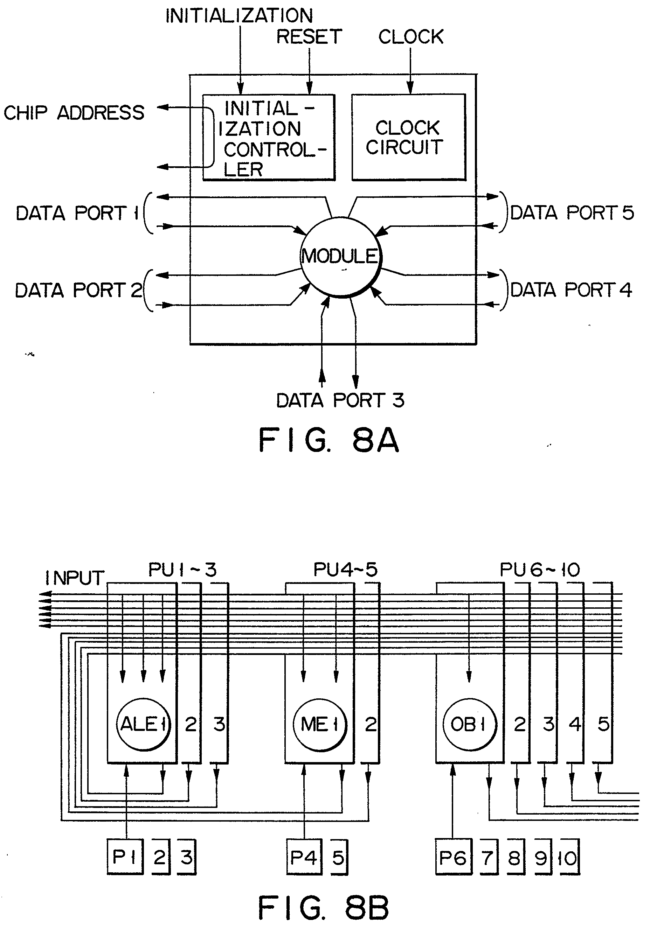

The structure of the DSPs 11 to mn will be described below. Fig. 8A shows a basic structure of a DSP developed as a digital signal processor for video signal processing. This DSP has five data ports in consideration of connection with a plurality of DSPs. Such a multi-data-port structure is the general feature of the DSP developed for video signal processing. The DSP signal processor 40 is designed such that DSPs are connected to one DSP in four directions, i.e., upper, lower, right, and left directions.

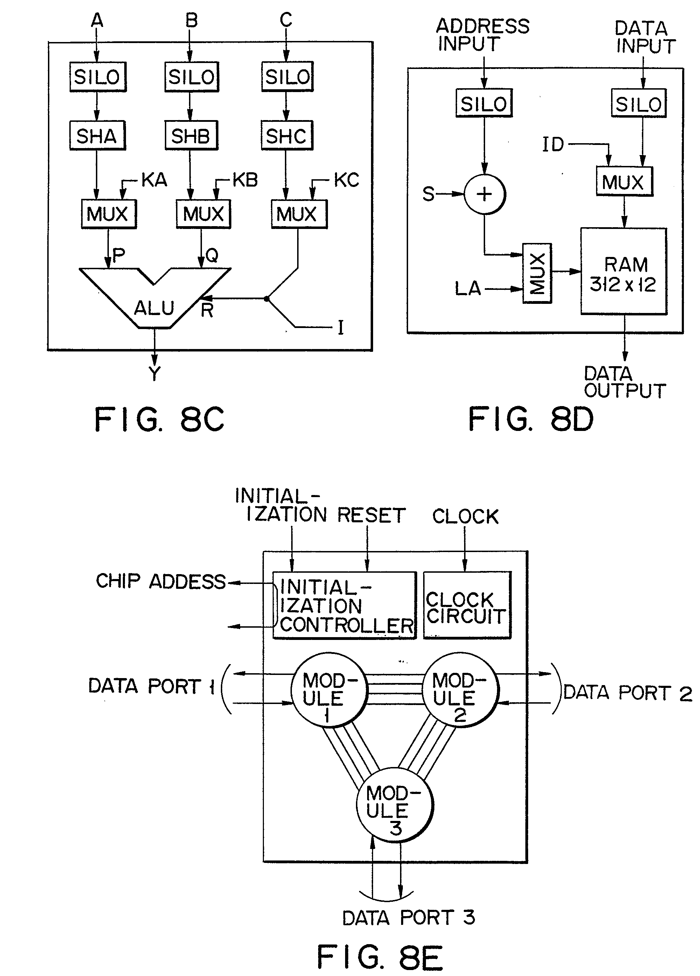

Fig. 8B shows an internal structure of the DSP. In Fig. 8B, the DSP has three systems of ALEs (arithmetic & logic elements) for performing arithmetic processing, two systems of MEs (memory elements) serving as memory sections each comprising a 512 x 12 static RAM, and five systems of OBs (output buffers). P1 to P10 store programs for controlling the respective systems of ALEs, MEs, and OBs. Figs. 8C and 8D show detailed structures of the ALE and the ME, respectively. Fig. 8E equivalently illustrates a case wherein a plurality of DSPs are connected.

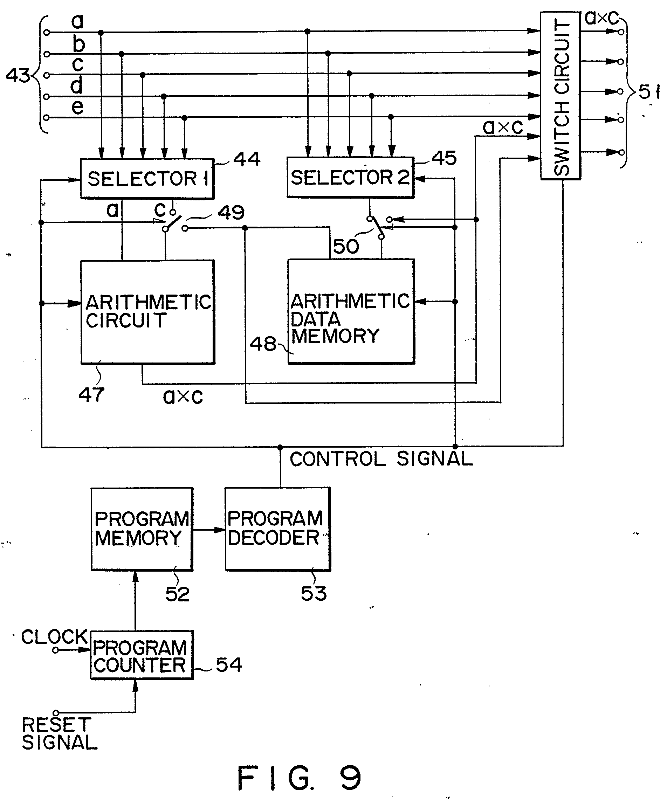

Fig. 9 illustrates the internal structure of the DSP rewritten as an equivalent diagram for the sake of easy understanding. Signals supplied to five input ports 43 are supplied to selectors 44 and 45, and a switch circuit 46. The selector 44 selects two out of five input signals, and outputs the selected signals. One of the two signals selected by the selector 44 is supplied to one input terminal of an arithmetic circuit 47. One of the other signal selected by the selector 44, and an output from an arithmetic data memory 48 is selected by a switch 49, and is selectively supplied to the other input terminal of the arithmetic circuit 47. The selector 45 selects one of the input five signals, and outputs the selected signal. One of the selected signal and the output from the arithmetic circuit 47 is selected by a switch 50, and is selectively supplied to the arithmetic data memory 48. The outputs from the arithmetic circuit 47 and the arithmetic data memory 48 are input to the switch circuit 46. The switch circuit 46 selects arbitrary five out of seven input signals, and outputs them to output ports 51.

In Fig. 9, reference numeral 52 denotes a program memory for storing programs for executing various arithmetic processing operations. A program read out from the program memory 52 is supplied to and decoded by a program decoder 53, and is then used for controlling the selectors 44 and 45, the switch circuit 46, the arithmetic circuit 47, the arithmetic data memory 48, and the like. The program memory 52 receives an output from a program counter 54 as an address. The program counter 54 counts clocks after a reset signal is input, thereby generating an address.

For example, when five signals $\underline{a}$ to $\underline{e}$ are supplied to the input ports 43, and an arithmetic result of a x c is to be output from the uppermost terminal in Fig. 9 of the output ports 51, the selector 44 selects the signals $\underline{a}$ and $\underline{c}$. In this case, the switch 49 is switched to supply the signal $\underline{c}$ selected by the selector 44 to the arithmetic circuit 47. The arithmetic circuit 47 performs an arithmetic operation of signal $\underline{a}$ x signal $\underline{c}$. The arithmetic result from the arithmetic circuit 47 is then output from the uppermost terminal in Fig. 9 of the output ports 51 via the switch circuit 46. Such an arithmetic processing operation is executed by controlling respective units on the basis of a control signal output from the program decoder 53.

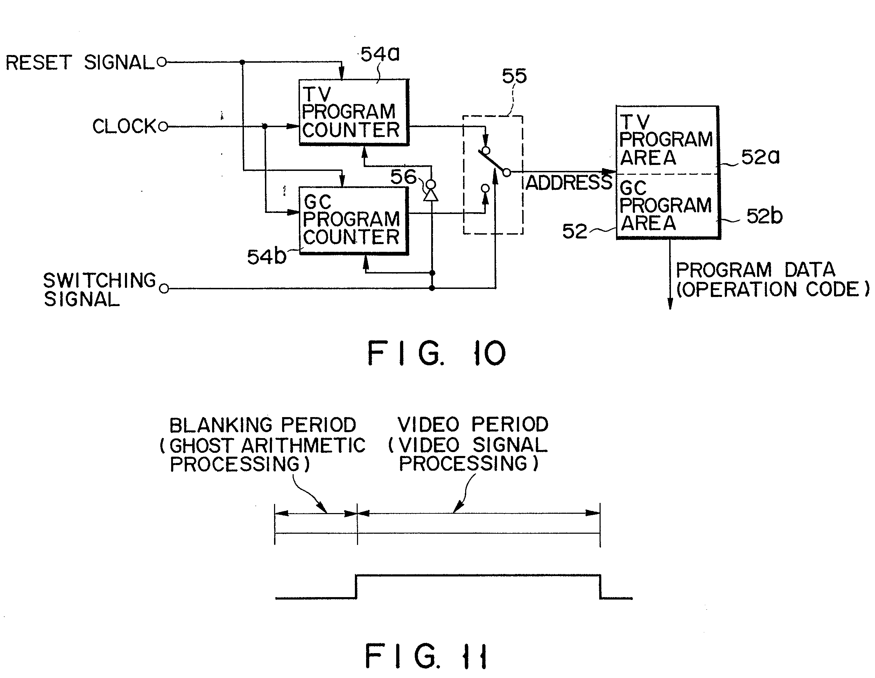

A means for storing a plurality of programs to be executed by the DSP, and a means for switching the plurality of programs at timings associated with a sync signal will be described below. As shown in Fig. 10, the program memory 52 has an area 52a for storing a video signal processing program, and an area 52b for storing a ghost cancel program. The program counter 54 also includes a counter 54a capable of addressing the area 52a of the program memory 52, and a counter 54b capable of addressing the area 52b. Address signals output from the two counters 54a and 54b are selectively supplied to the program memory 52 through a switch 55.

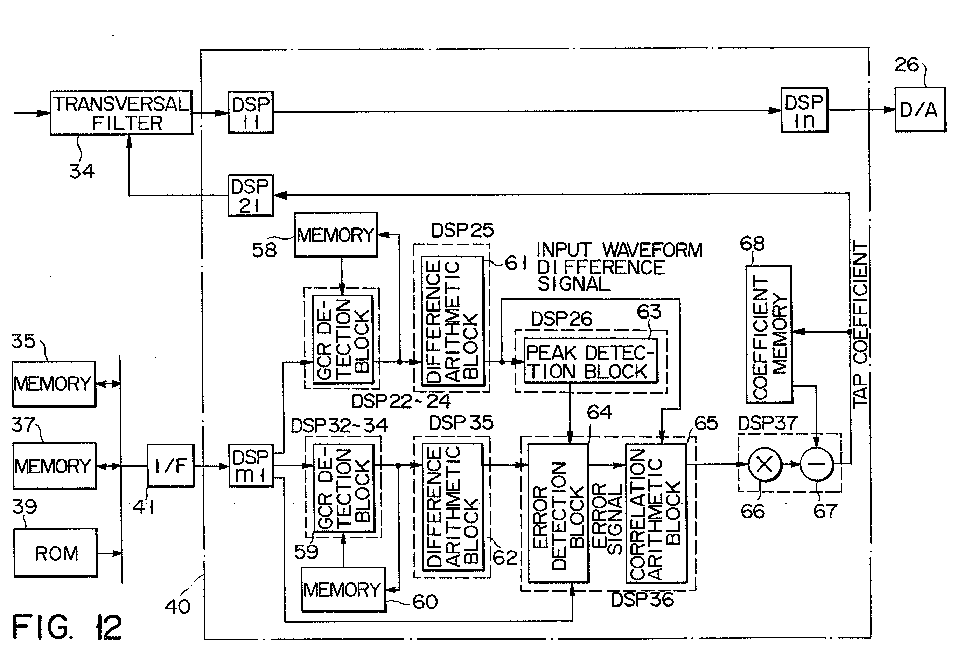

The switch 55 is switched on the basis of a switching signal output from the control signal generator 42 shown in Fig. 6. This switching signal goes to L (LOW) level during the blanking period, and goes to H (HIGH) level during the video period, as shown in Fig. 11. When the switching signal is at H level, it switches the switch 55 so as to input an address signal output from the program counter 54a to the program memory 52. When the switching signal is at L level, it switches the switch 55 so as to input an address signal output from the program counter 54b to the program memory 52. For this reason, during the video period, the content of the area 52a of the program memory 52 is read out on the basis of the address signal output from the program counter 54a, and the arithmetic operations of the DSP are executed based on the readout content, thereby executing video signal processing. On the other hand, during the blanking period, the content of the area 52b of the program memory 52 is read out on the basis of the address signal output from the program counter 54b, and the arithmetic operations of the DSP are executed based on the readout content, thereby executing ghost cancel processing.

More specifically, the program memory 52 has a total capacity of 64 words, and each of the areas 52a and 52b has a capacity of 32 words. When a reset signal is generated, a counter start address of the program counter 54a is set to be a binary value "000000", and a count start address of the program counter 54b is set to be a binary value "100000". The switching signal described above is directly supplied to a control terminal of the program counter 54b, and is also supplied to a control terminal of the program counter 54a via a NOT gate 56. This is to stop a count operation of one of the program counters 54b and 54a during the count operation of the other counter.

When the programs are controlled, as shown in Fig. 10, two different program control operations can be performed in a DSP. Fig. 10 exemplifies a switching operation of two programs. A switching operation of three or more programs can be realized by the same principle, as a matter of course. For example, a switching operation of four programs can be easily realized, in such a manner that four program counters are arranged, and two systems of switching signals are prepared to obtain binary codes.

Fig. 12 shows the principle of arithmetic processing executed when the DSP signal processor 40 executes ghost cancel processing. The content of this ghost cancel processing is the same as that described in the ghost cancel block 21 shown in Fig. 1. Data stored in the input waveform memory 35, the output waveform memory 37, and the reference waveform ROM 39 are supplied to the DSP ml via the interface 41, and are divided in units of output data from the memories 35, 37, and 39. The output data from the input waveform memory 35 is supplied to DSPs 22 to 24 constituting a waveform fetching GCR detection block 57, and arithmetic operations are performed using a memory 58 on the basis of processing programs stored in these DSPs 22 to 24, thereby detecting a GCR signal. The output data from the output waveform memory 37 is supplied to the DSPs 32 to 34 constituting a waveform fetching GCR detection block 59, and arithmetic operations are performed using a memory 60 on the basis of processing programs stored in these DSPs 32 to 34, thereby detecting a GCR signal.

The GCR signals output from the waveform fetching GCR detection blocks 57 and 59 are respectively supplied to the DSPs 25 and 35 respectively constituting difference arithmetic blocks 61 and 62, and difference signals are generated on the basis of processing programs stored in the DSPs 25 and 35. Thereafter, the input waveform difference signal output from the difference arithmetic block 61 is supplied to the DSP 26 constituting a peak detection block 63, thus generating peak position data. The peak position data, the output waveform difference signal output from the difference arithmetic block 62, and the output data from the reference waveform ROM 39 obtained from the DSP ml are supplied to an error detection block 64 constituted by the DSP 36, and an error calculation is performed on the basis of the peak position data. An error signal calculated by the error detection block 64 is supplied to a correlation arithmetic block 65 constituted by the DSP 36, and correlation arithmetic processing is executed by utilizing the input waveform difference signal output from the difference arithmetic block 61. The correlation arithmetic processing result is supplied to a multiplication block 66 constituted by the DSP 37, and is multiplied with a predetermined constant. The product is supplied to a subtraction block 67 constituted by the DSP 37, and is subtracted from data from a coefficient memory 68, thereby generating newtap coefficient data. The new tap coefficient is written in the coefficient memory 68, and is set in the transversal filter 34 via the DSP 21. The above-mentioned ghost cancel processing operations are realized by executing an arithmetic operation given by Equation (1) described above during the blanking period as a non-video period.

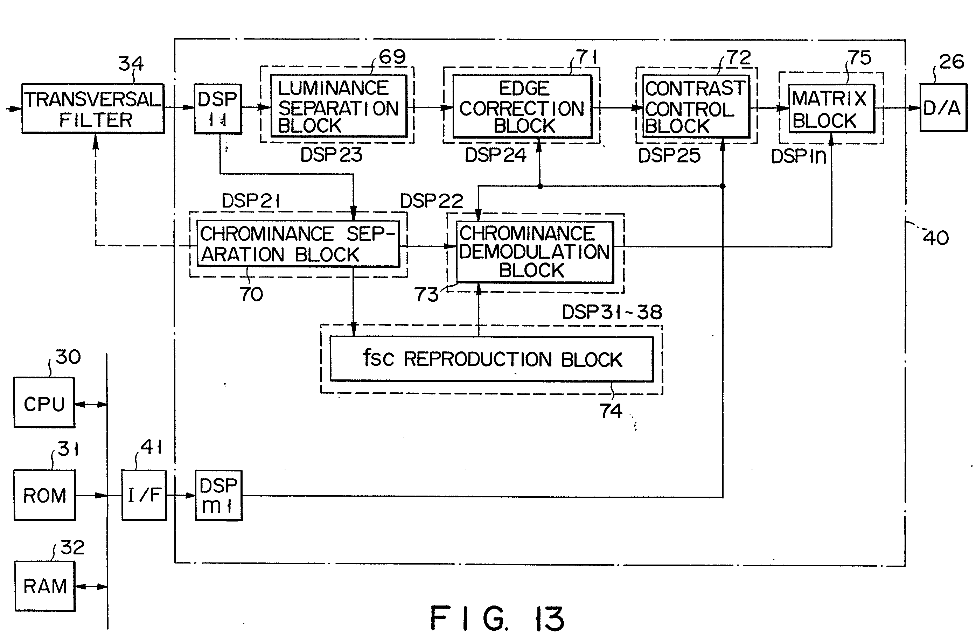

Fig. 13 shows the principle of arithmetic processing executed when the DSP signal processor 40 executes video signal processing. A video signal output from the transversal filter 34 is supplied to the DSP 23 constituting a luminance separation block 69 via the DSP 11 serving as an interface, and is also supplied to the DSP 21 constituting a chrominance separation block 70. The luminance separation block 69 separates a luminance signal from the input video signal, and the separated video signal is supplied to the DSP 24 constituting an edge correction block 71 to be subjected to edge correction. An edge correction amount is controlled by transmitting an instruction from the CPU 30 to the edge correction block 71 via the interface 41 and the DSP ml. The edge-corrected luminance signal is supplied to the DSP 25 constituting a contrast control block 72, and is subjected to contrast control. A contrast control amount is controlled by transmitting an instruction from the CPU 30 to the contrast control block 72 via the interface 41 and the DSP ml.

The chrominance separation block 70 separates a chrominance signal from the input video signal. The separated chrominance signal is supplied to the DSP 22 constituting a chrominance demodulation block 73 to be subjected to chrominance demodulation processing, and is also supplied to the DSPs 31 to 38 constituting a chrominance subcarrier reproduction block 74, thus reproducing a chrominance subcarrier fSC. The reproduced chrominance subcarrier fSC is used as a reference signal for the chrominance demodulation processing in the chrominance demodulation block 73. The luminance signal output from the contrast control block 72 and the chrominance signal output from the chrominance demodulation block 73 are supplied to the DSP 1n constituting a matrix block 75 to be subjected to matrix processing, thereby generating R, G, and B signals. The R, G, and B signals are output to the D/A converter 26.

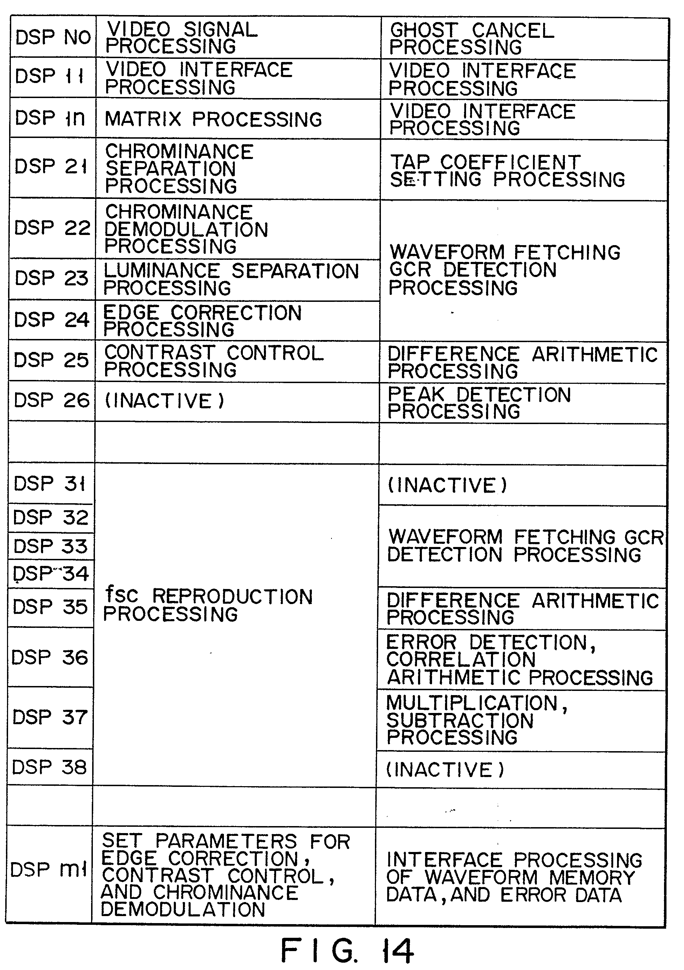

Fig. 14 shows processing operations of the DSPs 11 to mn constituting the DSP signal processor 40 in the video signal processing and the ghost cancel processing in contrast to each other. These two processing operations are executed by the processing programs stored in the DSPs 11 to mn, and the processing programs are switched, as has been described above with reference to Figs. 10 and 11. Thus, control is made such that the ghost cancel processing is executed during the non-video period, and the video signal processing is executed during the video period.

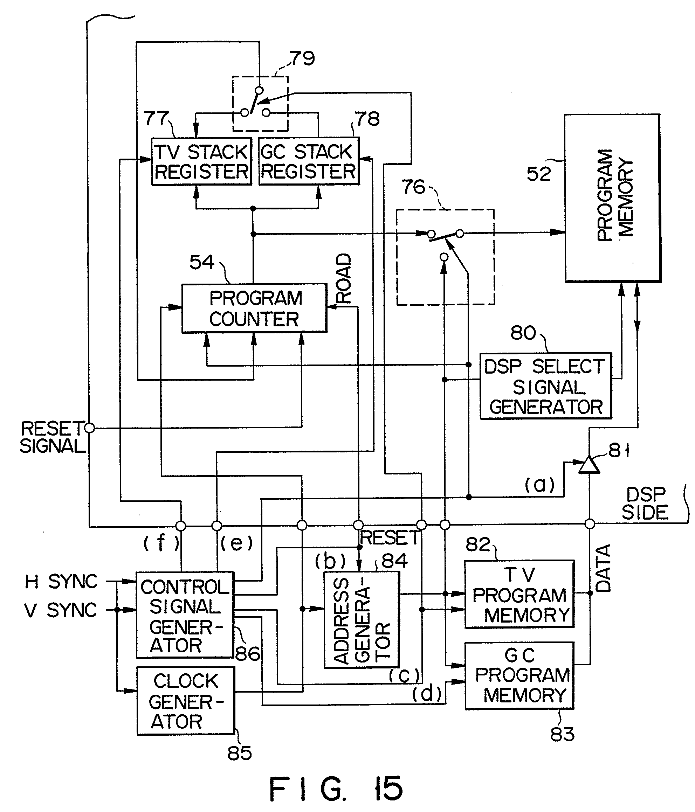

Fig. 15 shows another arrangement of the means for switching processing programs to be executed by the DSPs to selectively execute the video signal processing and the ghost cancel processing, as shown in Fig. 10. In Fig. 10, the program memory 52 of the DSP stores the video signal processing program and the ghost cancel processing program in the independent areas. In Fig. 15, however, the video signal processing program and the ghost cancel processing program stored in an external memory are selectively loaded in the program memory 52 in the DSP every time processing is executed.

More specifically, in the DSP, an output from the program counter 54 can be supplied to the program memory 52 as an address via a switch 76. The output from the program counter 54 is latched by a video signal stack register 77, and a ghost cancel stack register 78, and the latched values are selectively fed back to the program counter 54 via a switch 79. In Fig. 15, reference numeral 80 denotes a DSP select signal generator, which outputs a select signal to the program memory 52 to select a DSP in which the processing program is to be written by an external circuit. The processing program input from the external circuit is supplied to the program memory 52 via a gate 81.

A program memory 82 for storing a video signal processing program, and a program memory 83 for storing a ghost cancel processing program are prepared outside the DSP. These program memories 82 and 83 receive an address signal output from an address generator 84. The address signal output from the address generator 84 is supplied to the DSP select signal generator 80 to generate a select signal, and can also be supplied to the program memory 52 via the switch 76. That is, the address signal output from the program counter 54 and the address signal output from the address generator 84 are selectively supplied to the program memory 52 via the switch 76.

The address generator 84 generates the address signal by counting output clocks from a clock generator 85 for generating clocks synchronous with the horizontal sync signal H output from the sync separator 24 shown in Fig. 6. The output clocks from the clock generator 85 are also supplied to the program counter 54 to be counted by it. The horizontal and vertical sync signals H and V output from the sync separator 24 are supplied to a control signal generator 86 to generate various control signals, such as latch signals for the stack registers 77 and 78, switching signals for the switches 76 and 79, a load signal for loading a content of one of the stack registers 77 and 78 selected by the switch 79 to the program counter 54, a reset signal for the address generator 84, an ON/OFF control signal for the gate 81, and the like.

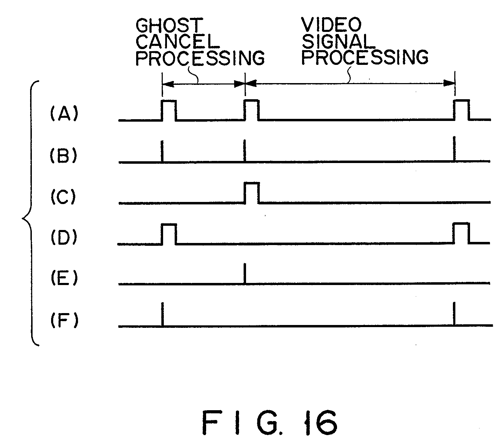

Figs. 16A to 16F show waveforms of control signals at points (a) to (f) in Fig. 15, respectively. At a start timing of the blanking period, i.e., at a start timing of the ghost cancel processing, since a control signal (a) goes to H level, the switch 76 is switched to input the address signal output from the address generator 84 to the program memory 52, and the gate 81 is enabled. At this time, a control signal (b) goes to H level, and the address generator 84 is reset, and then starts counting. At the same time, a control signal (d) goes to H level, and the program memory 83 is selected and is set in a read enable state. For this reason, the ghost cancel processing program read out from the program memory 83 is sequentially rewritten in the program memory 52 on the basis of the address signal output from the address generator 84. Since a control signal (c) is at L level at this time, the switch 79 is switched to supply the content of the stack register 78 to the program counter 54. When the control signal (b) goes to H level, the content of the stack register 78 is loaded in the program counter 54, and the program counter 54 starts counting from the loaded value. During an H-level period of the control signal (a), the program counter 54 is controlled not to start a count operation.

When the write operation of the ghost cancel processing program in the program memory 52 is completed in this manner, the control signal (a) goes to L level, and the switch 76 is switched to supply the address signal output from the program counter 54 to the program memory 52. For this reason, the ghost cancel processing program is sequentially read out from the program memory 52 on the basis of the address signal output from the program counter 54, and the DSP executes the ghost cancel processing operation during the next blanking period.

After an elapse of the blanking period, since the control signal (a) goes to H level, the switch 76 is switched to supply the address signal output from the address generator 84 to the program memory 52, and the gate 81 is enabled. At this time, the control signal (b) goes to H level, and the address generator 84 is reset, and then starts counting. At the same time, the control signal (c) goes to H level, and the program memory 82 is selected and is set in a read enable state. For this reason, the video signal processing program read out from the program memory 82 is sequentially written in the program memory 52 on the basis of the address signal output from the address generator 84. At this time, since the control signal (c) is at H level, the switch 79 is switched to supply the content of the stack register 77 to the program counter 54. When the control signal (b) goes to H level, the content of the stack register 77 is loaded in the program counter 54, and the program counter 54 starts counting from the loaded value. During an H-level period of the control signal (a), the program counter 54 is controlled not to start a count operation. Since a control signal (e) is at H level in this case, the last value of the program counter 54 during execution of the ghost cancel processing is latched in the stack register 78.

When the write operation of the video signal processing program in the program memory 52 is completed in this manner, the control signal (a) goes to L level, and the switch 76 is switched to supply the address signal output from the program counter 54 to the program memory 52. For this reason, the video signal processing program is sequentially read out from the program memory 52 on the basis of the address signal output from the program counter 54, and the DSP executes the video signal processing operation during the next video signal period.

After an elapse of the video processing period, since the control signal (a) goes to H level, the switch 76 is switched to supply the address signal output from the address generator 84 to the program memory 52, and the gate 81 is enabled. At this time, the control signal (b) goes to H level, and the address generator 84 is reset, and then starts counting. At the same time, the control signal (d) goes to H level, and the program memory 83 is selected and is set in a read enable state. For this reason, the video signal processing program read out from the program memory 83 is sequentially written in the program memory 52 on the basis of the address signal output from the address generator 84. At this time, since the control signal (c) is at L level, the switch 79 is switched to supply the content of the stack register 78 to the program counter 54. When the control signal (b) goes to H level, the content of the stack register 78 is loaded in the program counter 54, and the program counter 54 starts counting from the loaded value. During an H-level period of the control signal (a), the program counter 54 is controlled not to start a count operation. At this time, since a control signal (f) is at H level, the last value of the program counter 54 during execution of the video signal processing is latched by the stack register 77. The above-mentioned operations are repeated, and the ghost cancel processing and the video signal processing are alternately executed.

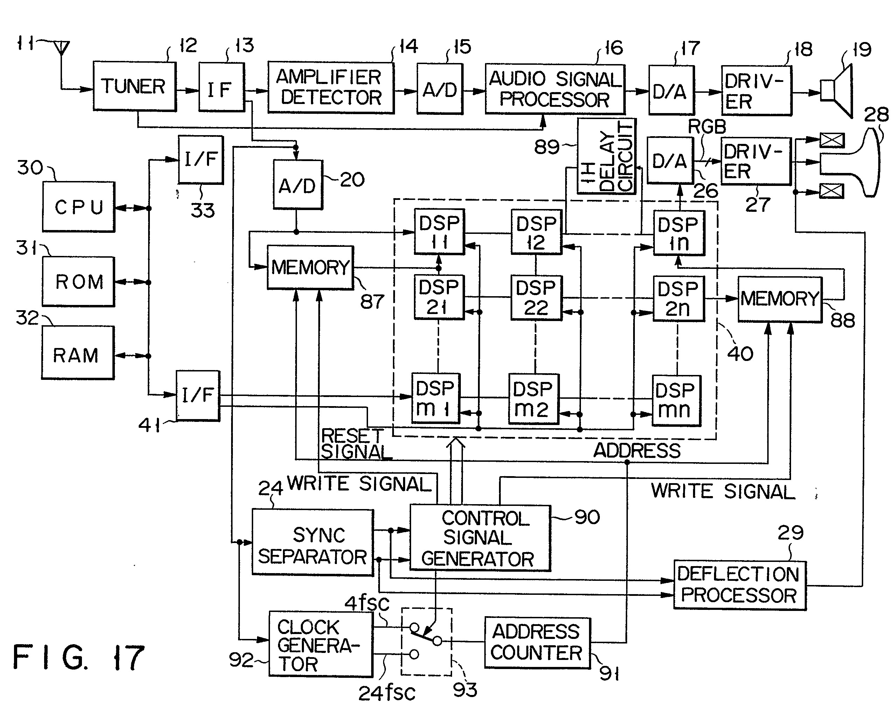

Since processing programs are switched by utilizing the plurality of DSPs 11 to mn, the ghost cancel processing and the video signal processing can be efficiently realized. Signal processing operations which can be executed by utilizing the plurality of DSPs 11 to mn are not limited to the ghost cancel processing and the video signal processing in the above-mentioned embodiment. As shown in Fig. 17, luminance signal processing and chrominance signal processing may be executed. The same reference numerals in Fig. 17 denote the same parts as in Fig. 6. A video signal converted into a digital signal by the A/D converter 20 is supplied to the DSP 11 in the DSP signal processor 40, and is also supplied to a video signal compression memory 87. A compressed chrominance signal output from the DSP 2n in the DSP signal processor 40 is supplied to a memory 88 to be subjected to expansion processing for restoring an original rate and timing. Thereafter, the processed signal is subjected to a matrix arithmetic operation with a luminance signal in the DSP 1n, and the arithmetic processing result is output to the D/A converter 26. A 1H delay circuit 89 arranged in the DSP signal processor 40 is used to synchronize a phase of the luminance signal with a timing of the chrominance signal.

The horizontal and vertical sync signals H and V output from the sync separator 24 are supplied to a control signal generator 90. The control signal generator 90 generates various control signals described above for switching the processing programs of the DSPs 11 to mn on the basis of the input horizontal and vertical sync signals H and V, and also generates write signals for writing data in the memories 87 and 88. The address signals to be supplied to the memories 87 and 88 are generated by an address counter 91. The address counter 91 selectively receives an expansion clock having a frequency 4fSC, and a compression clock having a frequency 6 x 4fSC generated by a clock generator 92 via a switch 93, and generates address signals corresponding to compression and expansion operations in the memories 87 and 88. The switch 93 is switched by a switching signal generated by the control signal generator 90.

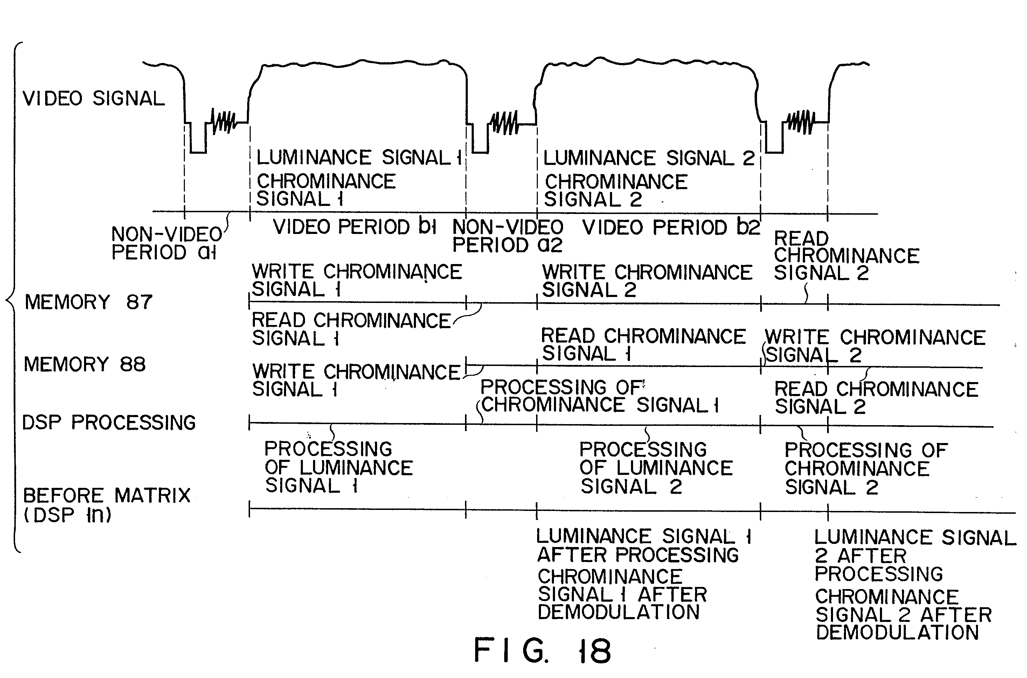

The operation will be described below with reference to the timing chart shown in Fig. 18. During a video period b1 of a video signal shown in Fig. 18, a chrominance signal 1 is written in the memory 87. In practice, data written in the memory 87 is not converted to a chrominance signal yet at this time, but has a format of a video signal. In this case, assume that data written in the memory 87 is subjected to processing such as chrominance demodulation in future, and is converted into the chrominance signal 1. In this case, the switch 93 is switched to supply a 4fSC clock to the address counter 91. The address counter 91 generates an address signal on the basis of the 4fSC clock, and the chrominance signal 1 is written in the memory 87. A write rate of the chrominance signal 1 in the memory 87 on the basis of the address signal generated based on the 4fSC clock is the same as that of a sampling clock of the A/D converter 20. At this time, the DSP signal processor 40 is executing processing of a luminance signal 1 during the video period b1 on the basis of a video signal supplied from the A/D converter 20 to the DSP 11.

After the chrominance signal 1 is written in the memory 87, the switch 93 is switched to supply a 6 x 4fSC clock to the address counter 91 simultaneously with the beginning of a non-video period a2. Thus, the address counter 91 generates an address signal which is generated based on the 6 x 4fSC clock, and works at a compression frequency. For this reason, the compressed chrominance signal 1 is read out from the memory 87, and is output to the DSP 11. At this time, the programs of the DSPs 11 to mn are switched to execute signal processing for demodulating the chrominance signal. When the chrominance signal 1 is output from the DSP 2n, it is written in the memory 88 at the same rate. When the next video period b2 starts, the switch 93 is switched to supply the 4fSC clock to the address counter 91. The chrominance signal 1 is read out from the memory 88 on the basis of the address signal generated by the address counter 91 based on the 4fSC clock. More specifically, the compressed chrominance signal 1 written in the memory 88 is expanded and is restored to a regular rate signal during the video period b2. At this time, a chrominance signal 2 during the video period b2 is written in the memory 87. Thereafter, the same operations as described above are repeated, and the luminance signal processing and the chrominance signal processing are alternately executed by the single DSP signal processor 40.

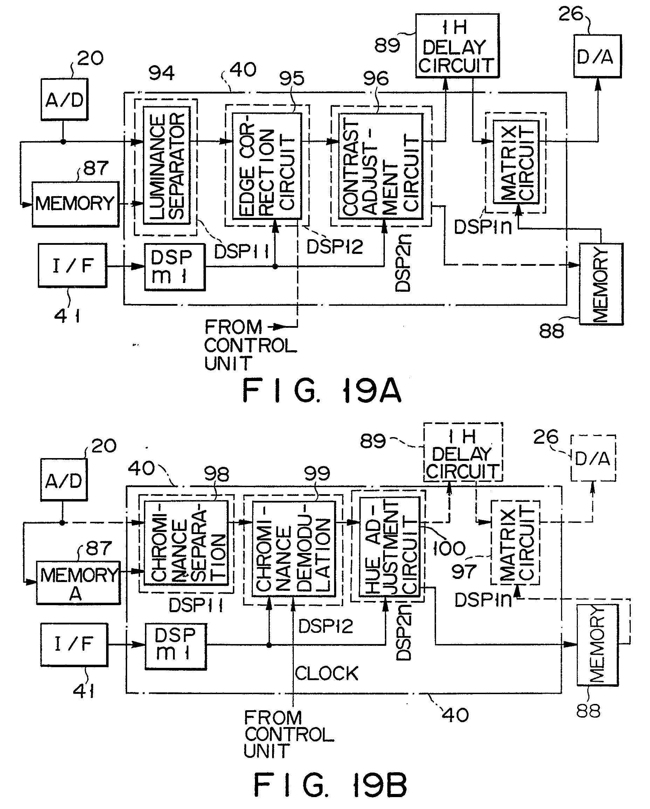

Figs. 19A and 19B respectively show the principles of arithmetic processing operations executed when the luminance signal processing and the chrominance signal processing are executed by the DSP signal processor 40. In Fig. 19A, a digital video signal output from the A/D converter 20 is supplied to the DSP 11 constituting a luminance separator 94, and a luminance signal is separated from the input video signal. The luminance signal is supplied to the DSP 12 constituting an edge correction circuit 95 to be subjected to edge correction processing. The processed signal is then supplied to the DSP 2n constituting a contrast adjustment circuit 96 to be subjected to contrast adjustment processing. Thereafter, the processed signal is supplied to the DSP In constituting a matrix circuit 97 via the 1H delay circuit 89. Note that blocks enclosed by dotted lines in Fig. 19A are not used in the luminance signal processing.

In Fig. 19B, a digital video signal output from the memory 87 is supplied to the DSP 11 constituting a chrominance separator 98, and a chrominance signal is separated from the video signal. The chrominance signal is supplied to the DSP 12 constituting a chrominance demodulator 99 to be subjected to chrominance demodulation processing. The processed signal is supplied to the DSP 2n constituting a hue adjustment circuit 100 to be subjected to hue adjustment processing. Thereafter, the processed signal is supplied to the memory 88. Note that blocks enclosed by dotted lines in Fig. 19B are not used in the chrominance signal processing.

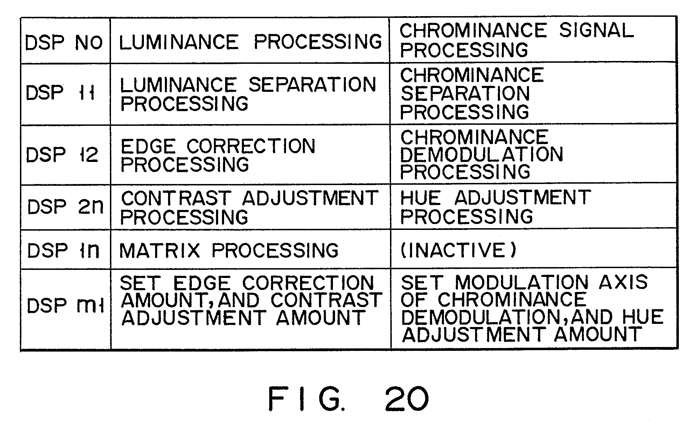

Fig. 20 shows processing operations of the DSPs 11 to mn constituting the DSP signal processor 40 in the luminance signal processing and the chrominance signal processing in contrast to each other. In Fig. 17, a chrominance signal is compressed, and is processed during a non-video period. Alternatively, a luminance signal may be compressed and processed during a non-video period, as a matter of course.

## Claims

1. An image processing apparatus for converting an input video signal into a digital video signal and performing a plurality of different signal processing operations on the digital video signal, comprising:

    - a digital processor (DSP) device (40) constituted by combining a plurality of DSPs (11 - mn) each . incorporating a program memory (52) which stores a plurality of programs corresponding to the plurality of different signal processing operations in independent areas (52a, 52b); characterized in that

    - switching means (42, 55) address said areas (52a, 52b) of said program memory (52) incorporated in each of said plurality of DSPs (11 - mn) of said signal processor device (40) to time-divisionally switch the programs to be supplied to said plurality of DSPs (11 - mn) in accordance with a switching signal indicating the blanking and the active video period of the video signal,

    - said switching means (42, 55) further selects first and second programs corresponding to said different signal processing operations during an active video period and a blanking period, respectively, of the video signal from said program memory (52) of each of said DSPs (11 - mn), and

    - said first and second programs correspond to luminance signal processing and chrominance signal processing, respectively.

2. An image processing apparatus for converting an input video signal into a digital video signal and performing a plurality of different signal processing operations on the digital video signal, comprising:

    - a digital signal processor (DSP) device (40) constituted by combining a plurality of DSPs (11 - mn) each incorporating a program memory (52); and

    - memories (82, 83), arranged outside said plurality of DSPs (11 - mn) of said digital signal processor device (40), for storing a plurality of programs corresponding to the plurality of different signal processing operations;

    characterized in that

    - switching means (84 - 86) time-divisionally switch desired programs from said memories (82, 83) in accordance with a switching signal indicating the blanking and the active video period of the video signal, and cause said program memory (52) of each of said DSPs (11 - mn) to load the switched program, and

    - said switching means transfers first and second programs corresponding to said different signal processing operations during an active video period and a blanking period, respectively, of the video signal to said program memory (52) of each of said DSPs (11 - mn).

3. The apparatus according to claim 2, characterized in that said first and second programs correspond to video signal processing and ghost cancel processing, respectively.

4. The apparatus according to claim 2, characterized in that said first and second programs correspond to luminance signal processing and chrominance signal processing, respectively.

**Patentansprüche**

1. Bildsignalverarbeitungsgerät zum Umsetzen eines eingespeisten Videosignales in ein digitales Videosignal und zum Durchführen einer Vielzahl von verschiedenen Signalverarbeitungsoperationen an dem digitalen Videosignal mit:

   - einer Digitalprozessor-(DSP-)Vorrichtung (40), die gebildet ist durch Kombinieren einer Vielzahl von DSPs (11 - nm), deren jede einen Programmspeicher (52) enthält, der eine Vielzahl von Programmen entsprechend der Vielzahl von verschiedenen Signalverarbeitungsoperationen in unabhängigen Bereichen (52a, 52b) speichert,

   dadurch gekennzeichnet, daß

   - eine Schaltereinrichtung (42, 55) die Bereiche (52,a, 52b) des Programmspeichers (52), der in jeder der Vielzahl von DSPs (11 - mn) der Signalprozessorvorrichtung (40) enthalten ist, adressiert, um in Zeitteilung die zu der Vielzahl von DSPs (11 - mn) zu speisenden Programme gemäß einem Schaltsignal zu schalten, das die Austast- und die aktive Videoperiode des Videosignales anzeigt,

   - die Schaltereinrichtung (42, 55) weiterhin erste und zweite Programme entsprechend den verschiedenen Signalverarbeitungsoperationen während einer aktiven Videoperiode bzw. einer Austastperiode des Videosignales aus dem Programmspeicher (52) von jeder der DSPs (11 - mn) auswählt, und

   - die ersten und zweiten Programme einer Luminanzsignalverarbeitung bzw. einer Chrominanzsignalverarbeitung entsprechen.

2. Bildverarbeitungsgerät zum Umsetzen eines eingespeisten Videosignales in ein digitales Videosignal und zum Durchführen einer Vielzahl von verschiedenen Signalverarbeitungsoperationen an dem digitalen Videosignal, mit

   - einer Digitalsignalprozessor- (DSP-)Vorrichtung (40), die gebildet ist durch Kombinieren einer Vielzahl von DSPs (11 - mn), deren jede einen Programmspeicher (52) enthält, und

   - Speichern (82, 83), die außerhalb der Vielzahl von DSPs (11 - mn) der Digitalprozessorvorrichtung (40) angeordnet sind, um eine Vielzahl von Programmen entsprechend der Vielzahl von verschiedenen Signalverarbeitungsoperationen zu speichern,

   dadurch gekennzeichnet, daß

   - eine Schaltereinrichtung (84 bis 86) in Zeitteilung gewünschte Programme von den Speichern (82, 83) gemäß einem Schaltsignal schaltet, das die Austast- und die aktive Videoperiode des Videosignales anzeigt, und den Programmspeicher (52) von jeder der DSPs (11 - mn) veranlaßt, das geschaltete Programm zu laden, und

   - die Schaltereinrichtung erste und zweite Programme entsprechend den verschiedenen Signalverarbeitungsoperationen während einer aktiven Videoperiode bzw. einer Austastperiode des Videosignales zu dem Programmspeicher (52) von jeder der DSPs (11 - nm) überträgt.

3. Gerät nach Anspruch 2, dadurch gekennzeichnet, daß die ersten und zweiten Programme einer Videosignalverarbeitung bzw. einer Geistlöschverarbeitung entsprechen.

4. Gerät nach Anspruch 2, dadurch gekennzeichnet, daß die ersten und zweiten Programme einer Luminanzsignalverarbeitung bzw. einer Chrominanzsignalverarbeitung entsprechen.

## EP 0 449 075 B1

**Revendications**

1. Un dispositif de traitement d'images, pour convertir un signal vidéo d'entrée en un signal vidéo numérique et effectuer une pluralité de fonctionnements de traitement de signal différents sur le signal vidéo numérique, comprenant :

   - un dispositif (40) de processeur de signal numérique (DSP) constitué en combinant une pluralité de processeurs de signal numériques (11 à mn), chacun incorporant une mémoire (52) de programme, qui emmagasine une pluralité de programmes correspondant à la pluralité de fonctionnements de traitement de signal différents, dans des zones (52a, 52b) indépendantes ;

   caractérisé en ce que

   - des moyens (42, 55) de commutation adressent lesdites zones (52a, 52b) de ladite mémoire (52) de programme incorporée dans chacun des processeurs de signal numériques de ladite pluralité de processeurs de signal numériques (11 à mn) dudit dispositif (40) de processeur de signal, afin de commuter en temps partagé les programmes devant être fournis à ladite pluralité de processeurs de signal numériques (11 à mn), en conformité avec un signal de commutation indiquant la période de suppression et la période de vidéo active du signal vidéo,

   - lesdits moyens (42, 55) de commutation sélectionnent de plus des premier et second programmes correspondant auxdits fonctionnements de traitement de signal différents, durant une période de vidéo active et une période de suppression, respectivement, du signal vidéo provenant de ladite mémoire (52) de programme de chacun desdits processeurs de signal numériques (11 à mn) et

   - lesdits premier et second programmes correspondent au traitement de signal de luminance et au traitement de signal de chrominance, respectivement.

2. Un dispositif de traitement d'images, pour convertir un signal vidéo d'entrée en un signal vidéo numérique et effectuer une pluralité de fonctionnements de traitement de signal différents sur le signal vidéo numérique, comprenant :

   - un dispositif (40) de processeur de signal numérique (DSP) constitué en combinant une pluralité de processeurs de signal numériques (11 à mn), chacun incorporant une mémoire (52) de programme ; et
   des mémoires (82, 83), agencées à l'extérieur de ladite pluralité de processeurs de signal numérique (11 à mn) dudit dispositif (0) de processeur de signal numérique, pour emmagasiner une pluralité de programmes correspondant à la pluralité de fonctionnements de traitement de signal différents ;

   caractérisé en ce que

   - des moyens (84 à 86) de commutation commutent en temps partagé les programmes désirés provenant desdites mémoires (82, 83), en conformité avec un signal de commutation indiquant la période de suppression et la période de vidéo active du signal vidéo, et amènent ladite mémoire (52) de programme de chacun desdits processeurs de signal numériques (11 à mn) à charger le programme commuté, et

   - lesdits moyens de commutation transfèrent les premier et second programmes, correspondant auxdits fonctionnements de traitement de signal différents durant une période de vidéo active et une période de suppression, respectivement, du signal vidéo, à ladite mémoire (52) de programme de chacun desdits processeurs de signal numériques (11 à mn).

3. Le dispositif selon la revendication 2, caractérisé en ce que lesdits premier et second programmes correspondent au traitement de signal vidéo et au traitement d'annulation d'image fantôme, respectivement.

4. Le dispositif selon la revendication 2, caractérisé en ce que lesdits premier et second programmes correspondent au traitement de signal de luminance et au traitement de signal de chrominance, respectivement.

FIG. 1

EP 0 449 075 B1

FIG. 2

FETCH WAVEFORM — S1

CALCULATE DIFFERENCE — S2

DETECT PEAK — S3

CALCULATE ERROR — S4

PERFORM CORRECTION ARITHMETIC OPERATION OF TAP COEFFICIENT — S5

SET TAP COEFFICIENT — S6

FIG. 3

F I G. 4

F I G. 5

FIG. 6

**(A)**

VERTICAL SYNC SIGNAL

VIDEO SIGNAL

1.2 msec

16.7 msec

VIDEO PERIOD
(DISPLAY PERIOD)

VERTICAL BLANKING PERIOD
(NON-DISPLAY PERIOD)

**(B)**

HORIZONTAL SYNC SIGNAL

VIDEO SIGNAL

COLOR BURST SIGNAL

11.2 μsec

63.5 μsec

VIDEO PERIOD
(DISPLAY PERIOD)

HORIZONTAL BLANKING PERIOD

**(C)**

VIDEO SIGNAL PROCESSING PERIOD

GHOST ARITHMETIC PROCESSING PERIOD

# F I G. 7

INITIALIZATION

RESET          CLOCK

CHIP ADDRESS

INITIAL-
IZATION
CONTROL-
LER

CLOCK
CIRCUIT

DATA PORT 1

MODULE

DATA PORT 5

DATA PORT 2

DATA PORT 4

DATA PORT 3

# FIG. 8A

INPUT      PU1~3          PU4~5          PU6~10

ALE1  2  3        ME1  2          OB1  2  3  4  5

P1  2  3         P4  5          P6  7  8  9  10

# FIG. 8B

17

A          B          C

SILO       SILO       SILO

SHA        SHB        SHC

KA         KB         KC

MUX        MUX        MUX

P          Q

ALU    R

I

Y

FIG. 8C

ADDRESS INPUT          DATA INPUT

SILO                   SILO

ID

S    +                 MUX

LA    MUX    RAM 312 x 12

DATA OUTPUT

FIG. 8D

INITIAL-IZATION RESET    CLOCK

CHIP ADDESS    INITIAL-IZATION CONTROLLER    CLOCK CIRCUIT

DATA PORT 1    MOD-ULE 1    MOD-ULE 2    DATA PORT 2

MOD-ULE 3

DATA PORT 3

FIG. 8E

F I G. 9

## FIG. 10

BLANKING PERIOD
(GHOST ARITHMETIC
PROCESSING)

VIDEO PERIOD
(VIDEO SIGNAL
PROCESSING)

## FIG. 11

EP 0 449 075 B1

FIG. 12

EP 0 449 075 B1

TRANSVERSAL FILTER 34

DSP 11

LUMINANCE SEPARATION BLOCK 69
DSP 23

EDGE CORRECTION BLOCK 71
DSP 24

CONTRAST CONTROL BLOCK 72
DSP 25

MATRIX BLOCK 75
DSP 1n

D/A 26

DSP 21
CHROMINANCE SEPARATION BLOCK 70

DSP 22
CHROMINANCE DEMODULATION BLOCK 73

DSP 31~38
fsc REPRODUCTION BLOCK 74

40

CPU 30

ROM 31

I/F 41

DSP m1

RAM 32

F I G. 13

| DSP N0 | VIDEO SIGNAL PROCESSING | GHOST CANCEL PROCESSING |
|---|---|---|
| DSP 11 | VIDEO INTERFACE PROCESSING | VIDEO INTERFACE PROCESSING |
| DSP 1n | MATRIX PROCESSING | VIDEO INTERFACE PROCESSING |
| DSP 21 | CHROMINANCE SEPARATION PROCESSING | TAP COEFFICIENT SETTING PROCESSING |
| DSP 22 | CHROMINANCE DEMODULATION PROCESSING | WAVEFORM FETCHING GCR DETECTION PROCESSING |
| DSP 23 | LUMINANCE SEPARATION PROCESSING | |
| DSP 24 | EDGE CORRECTION PROCESSING | |
| DSP 25 | CONTRAST CONTROL PROCESSING | DIFFERENCE ARITHMETIC PROCESSING |
| DSP 26 | (INACTIVE) | PEAK DETECTION PROCESSING |
| | | |
| DSP 31 | fsc REPRODUCTION PROCESSING | (INACTIVE) |
| DSP 32 | | WAVEFORM FETCHING GCR DETECTION PROCESSING |
| DSP 33 | | |
| DSP 34 | | |
| DSP 35 | | DIFFERENCE ARITHMETIC PROCESSING |
| DSP 36 | | ERROR DETECTION, CORRELATION ARITHMETIC PROCESSING |
| DSP 37 | | MULTIPLICATION, SUBTRACTION PROCESSING |
| DSP 38 | | (INACTIVE) |
| | | |
| DSP m1 | SET PARAMETERS FOR EDGE CORRECTION, CONTRAST CONTROL, AND CHROMINANCE DEMODULATION | INTERFACE PROCESSING OF WAVEFORM MEMORY DATA, AND ERROR DATA |

FIG. 14

F I G. 15

F I G. 16

F I G. 17

FIG. 18

EP 0 449 075 B1

FIG. 19A

FIG. 19B

| DSP N0 | LUMINANCE PROCESSING | CHROMINANCE SIGNAL PROCESSING |
|---|---|---|
| DSP 11 | LUMINANCE SEPARATION PROCESSING | CHROMINANCE SEPARATION PROCESSING |
| DSP 12 | EDGE CORRECTION PROCESSING | CHROMINANCE DEMODULATION PROCESSING |
| DSP 2n | CONTRAST ADJUSTMENT PROCESSING | HUE ADJUSTMENT PROCESSING |
| DSP 1n | MATRIX PROCESSING | (INACTIVE) |
| DSP m1 | SET EDGE CORRECTION AMOUNT, AND CONTRAST ADJUSTMENT AMOUNT | SET MODULATION AXIS OF CHROMINANCE DEMODULATION, AND HUE ADJUSTMENT AMOUNT |

# F I G.  20